# EUROPÄISCHE PATENTANMELDUNG

(11) **EP 3 736 750 A1**
(43) Veröffentlichungstag der Anmeldung: **11.11.2020**
(21) Anmeldenummer: 19217966.1
(22) Anmeldetag: 19.12.2019
(51) Int. Cl.: G06Q 10/02, G06Q 10/04

(54) **VERFAHREN ZUR ORGANISATION DES TRANSPORTS WENIGSTENS EINER PERSON ALS MITFAHRER, SYSTEM ZUR IMPLEMENTIERUNG, COMPUTERPROGRAMM UND COMPUTERSYSTEM**

(30) Priorität: 07.05.2019 DE 102019111755
(71) Anmelder: hop on TM UG (haftungsbeschränkt), 49584 Fürstenau (DE)
(72) Erfinder: MERTENS, Thomas, 49584 Fürstenau (DE)
(74) Vertreter: Dr. Träger & Strautmann PAe PartG mbB

(57) **Zusammenfassung**

Die Erfindung betrifft ein Verfahren zur Organisation des Transports wenigstens einer Person als Mitfahrer (11) von einem Startort zu einem Zielort. Dabei wird die Person als Mitfahrer (11) von einem Fahrer (13a, 13b, 13c, 13d) in einem Kraftfahrzeug mitgenommen, wobei der Mitfahrer (11) seinen Startort und seinen Zielort einem zentralen Organisationssystem (10) als Mitfahrdaten und Mitnahmewunsch mitteilt und wobei wenigstens ein Fahrer (13a, 13b, 13c, 13d) dem Organisationssystem (10) seine Position und/oder Fahrtstrecke und/oder Fahrtziel als Fahrerdaten mitteilt. Das Organisationssystem (10) nimmt eine Zuordnung des Mitfahrers (11) zu einem Fahrer (13a, 13b, 13c, 13d) vor, um so die Mitnahme des Mitfahrers (11) vom Startort zum Zielort zu organisieren. Das Verfahren zeichnet sich dadurch aus, dass das Organisationssystem (10) die Mitnahme des Mitfahrers (11) derart organisiert, dass dessen Fahrtstrecke derart in mehrere Streckenabschnitte (15a, 15b, 15c, 15d) unterteilt wird, dass die einzelnen Streckenabschnitte (15a, 15b, 15c, 15d) anhand der Fahrerdaten mehrerer Fahrer (13a, 13b, 13c, 13d) eine Gesamtstrecke für den Mitfahrer (11) vom Startort zum Zielort ergeben. Des Weiteren betrifft die Erfindung ein entsprechendes System zur Implementierung, ein Computerprogramm und ein Computersystem.

## Beschreibung

Die Erfindung betrifft ein Verfahren zur Organisation des Transports wenigstens einer Person als Mitfahrer. Des Weiteren betrifft sie ein System zur Implementierung eines solchen Verfahrens. Außerdem betrifft sie ein Computerprogramm zur Ausführung eines derartigen Verfahrens. Schließlich betrifft sie ein Computersystem zur Aufführung eines derartigen Computerprogramms.

Die Möglichkeit der gemeinsamen Nutzung von Fahrzeugen des individuellen Personenverkehrs, also in der Regel Kraftfahrzeugen beziehungsweise Automobilen, dient insbesondere zur Verkehrsvermeidung oder auch nur zur Reduzierung der individuellen Kosten der Fortbewegung. Mit anderen Worten handelt es sich um die Organisation von Mitfahrgelegenheiten.

Aus dem Stand der Technik sind Verfahren zur Organisation von Mitfahrgelegenheiten bekannt. Bei diesen wird die Mitfahrt im Vorhinein geplant, indem ein Mitfahrer Startort und Zielort in ein Organisationssystem eingibt und diese mit den Fahrtstrecken möglicher Fahrer abgeglichen werden. Wenn eine Fahrtstrecke übereinstimmt, kann der Mitfahrer die Mitfahrt buchen.

Nachteilig an den bekannten Verfahren ist, dass die Mitfahrer bei der Auswahl der Fahrstrecken deutlich eingeschränkt sind. In der Regel werden nämlich als Fahrtstrecken der Fahrer zumeist nur stark frequentierte Strecken angeboten. Außerdem muss die Auswahl im Vorhinein einer Fahrt erfolgen.

Es ist daher eine Aufgabe der Erfindung, die bekannten Verfahren zu verbessern. Insbesondere soll eine bessere Flächendeckung und auch Streckenauswahl erreicht werden. Auch soll eine höhere Flexibilität erreicht werden.

Die Aufgabe wird gelöst durch ein Verfahren mit den Merkmalen der unabhängigen Ansprüche. Weitere Varianten werden durch die abhängigen Ansprüche beschrieben.

Ein Verfahren zur Organisation des Transports wenigstens einer Person als Mitfahrer von einem Startort zu einem Zielort löst diese Aufgabe. Dabei wird die Person als Mitfahrer von einem Fahrer in einem Kraftfahrzeug mitgenommen. Der Mitfahrer teilt dazu seinen Startort und seinen Zielort einem zentralen Organisationssystem als Mitfahrdaten und Mitnahmewunsch mit. Wenigstens ein Fahrer teilt dem Organisationssystem seine Position und/oder Fahrtstrecke und/oder Fahrtziel als Fahrerdaten mit. Das Organisationssystem nimmt dann eine Zuordnung des Mitfahrers zu einem Fahrer vor, um so die Mitnahme des Mitfahrers vom Startort zum Zielort zu organisieren. Das erfindungsgemäße Verfahren zeichnet sich dadurch aus, dass das Organisationssystem die Mitnahme des Mitfahrers derart organisiert, dass dessen Fahrtstrecke derart in mehrere Streckenabschnitte unterteilt wird, dass die einzelnen Streckenabschnitte anhand der Fahrerdaten mehrerer Fahrer eine Gesamtstrecke für den Mitfahrer vom Startort zum Zielort ergeben. Damit wird erreicht, dass die Anzahl der auswählbaren Fahrtstrecken deutlich erhöht wird. Die gewünschte Mitfahrstrecke kann damit in einzelnen Teilstrecken zurückgelegt werden. Die Mitfahrstrecke kann teilweise oder vollständig zurückgelegt werden.

Vorzugsweise wird mit Hilfe des Organisationssystems während der Mitfahrt die aktuelle Position des Mitfahrers mit weiteren potentiellen Mitfahrgelegenheiten für weitere Streckenabschnitte abgeglichen. Damit kann die weitere Mitfahrt anhand aktueller Mitfahrdaten sichergestellt werden. Mit anderen Worten kann auch während der Mitfahrt insbesondere auf Änderungen in der Fahrtstrecke des Mitfahrers oder auch anderer potentieller Fahrer reagiert werden. So kann die gesamte Mitfahrstrecke des Mitfahrers dynamisch an die aktuellen Gegebenheiten angepasst werden. Insbesondere können neue Mitfahrgelegenheiten ebenso berücksichtigt werden, wie einzelne Ausfälle von Mitfahrgelegenheiten. Weiter vorzugsweise kann auch die Anzahl beziehungsweise Größe der Personen und/oder Gepäckstücke berücksichtigt werden. Auf diese Weise kann beispielsweise gezielt ein Fahrzeug und/oder eine Fahrstrecke ausgewählt werden, insbesondere eine Fahrtstrecke mit wenigstens einem passenden Fahrzeug.

Vorzugsweise wird der Mitfahrer auf zumindest zwei Streckenabschnitten zwischen Startort und Zielort von verschiedenen Fahrern und/oder mit verschiedenen Kraftfahrzeugen mitgenommen. Insbesondere wird wenigstens ein Umstieg zwischen Kraftfahrzeugen erforderlich. Der Mitfahrer setzt auf diese Weise seine gesamte Fahrtstrecke aus mehreren Teilstrecken zusammen. Dies wird insbesondere durch das Organisationssystem vermittelt.

Dem Mitfahrer und/oder Fahrer wird bevorzugt während der Fahrt ein Signal zur Beendigung der Mitfahrt gegeben. Hierbei kann es sich um ein visuelles, ein akustisches, ein haptisches und/oder ähnliches wahrnehmbares Signal handeln. Vorzugsweise kann damit der Fahrer zum Anhalten und/oder der Mitfahrer zum Ausstieg und/oder Umstieg in ein anderes Fahrzeug aufgefordert werden. Die Signale müssen dazu den entsprechenden Vorschriften genügen, wie beispielsweise der Unbedenklichkeit beim Lenken eines Kraftfahrzeugs beziehungsweise Automobils.

Die Fahrtstrecke zwischen Startort und Zielort wird aufgrund der Zusammensetzung aus mehreren Streckenabschnitten gegenüber einer direkten Verbindung verlängert. Zur Sicherstellung des Weitertransports kann wenigstens ein Umweg zurückgelegt werden. Damit kann zugunsten einer möglichst kompletten Reisewegs oder Mitfahrstrecke eine Verlängerung des Weges in Kauf genommen werden. Vorzugsweise können maximale Strecken und/oder Zeiten und/oder Kosten für Umwege festgelegt werden, insbesondere durch den Mitfahrer. Ein Mitfahrer kann für seine Fahrtstrecke insbesondere einen Umweg akzeptieren. Weiter bevorzugt können maximale Umwegstrecken und/oder Umwegzeiten und/oder Umwegkosten vorgegeben werden. Damit können beispielsweise seitens des Mitfahrers akzeptable Maximalwerte für Umwege vorgegeben werden, wie Zeiten in Minuten, Strecken in Kilometer oder auch entstehende Zusatzkosten für längere Strecken. Gegebenenfalls kann auch ein Fahrer Umwege akzeptieren und/oder angeben.

Der Fahrer übermittelt seine Position und/oder seinen Zielort und/oder seine Mitnahmebereitschaft an das Organisationssystem, vorzugsweise zumindest streckenabschnittsweise. Damit kann eine Kombination von Streckenabschnitten erfolgen.

Der Mitfahrer und/oder der Fahrer übermitteln/übermittelt insbesondere eigene Positionsdaten an das Organisationssystem. Dies erfolgt vorzugsweise zumindest auch während der gemeinsam zurückgelegten Fahrtstrecke. Auf diese Weise kann auch ein Ausstieg oder Zustieg weiterer Mitfahrer ermöglicht werden.

Vorzugsweise werden/wird die Übermittlung und/oder der Austausch von Daten zwischen Fahrer und/oder Mitfahrer und/oder Organisationssystem vorgenommen. Hierzu dienen insbesondere Mobilfunkgeräte, vorzugsweise per kurzreichweitigem Funk und/oder per Mobilfunknetz. Derartiger berühungsloser und/oder gegebenenfalls langreichweitiger Datenaustausch sorgt für eine sichere Kommunikation.

Der Mitfahrer und der Fahrer tauschen vorzugsweise wenigstens einen Sicherheitskode aus zur Sicherstellung und/oder Buchung der Mitfahrgelegenheit. Dies wird vorzugsweise mittels ihrer Mobilgeräte erledigt. Weiter bevorzugt werden biometrische Daten überprüft und/oder ausgetauscht. Beispielsweise kann eine Fingerabdruckerkennung und/oder Gesichtserkennung und/oder Stimmerkennung vorgenommen werden. Die kann insbesondere mittels Mobilgeräten erfolgen, wie Mobiltelefonen, vorzugsweise durch Fingerabdruckscanner beziehungsweise Kamera. Der Datenabgleich kann unmittelbar zwischen den Geräten und/oder mittels eines zentralen Servers erfolgen. Weiter vorzugsweise wird eine direkte Verbindung zwischen diesen Mobilgeräten hergestellt und/oder es erfolgt ein direkter Datenaustausch. Auf diese Weise kann eine hohe Sicherheit vor allem bei Buchung und Abrechnung erreicht werden. Um einen Abgleich persönlicher und/oder biometrischer Daten vornehmen zu können, kann eine Registrierung mittels entsprechender Daten erforderlich sein und/oder zur Bedingung gemacht werden. Hierzu lassen sich unmittelbar die biometrischen Daten der sich registrierenden Person einlesen oder auch offiziellen Dokumenten, wie Personalausweisen oder Reisepässen, entnehmen, beispielsweise aus enthaltenen Datenträgern wie RFID-Chips.

Bevorzugt tauschen Mitfahrer und Fahrer zu Beginn der Mitfahrt und/oder zum Ende der Mitfahrt einen Kode und/oder Zeitpunkt und/oder Position aus und/oder halten diese jeweils fest. Weiter vorzugsweise erfolgt dies mittels ihrer Mobilgeräte, weiter vorzugsweise durch Verbindungsaufnahme der Mobilgeräte miteinander. Dies kann zum Beispiel mittels Funk- oder Infrarotschnittelle erfolgen, vorzugsweise per Wireless LAN (WLAN), Bluetooth, Near Field Communications (NFC) oder auch mittels Radio Frequency Identification Device (RFID). Auf diese Weise kann vorzugsweise ein Datenaustausch und/oder eine Identifikation vorgenommen werden.

Insbesondere erfolgt eine Abrechnung der Mitfahrgelegenheit anhand der Erfassung der Positionsdaten des Mitfahrers und/oder des Fahrers, vorzugsweise durch Ermittlung der gemeinsam zurückgelegten Strecke und/oder des Anteils an der Gesamtstrecke. Die Abrechnung kann ebenso während wie auch unmittelbar nach Zurücklegen eines Streckenabschnitts oder der Gesamtstrecke vorgenommen werden. Auch eine spätere Abrechnung losgelöst von der eigentlichen Fahrt ist möglich. Eine Einigung auf den Fahrpreis kann auch vor Fahrtbeginn erfolgen. Beispielsweise kann sich auf einen Pauschalpreis geeinigt werden. In jedem Fall kann eine unmittelbare Einigung zwischen Fahrer und Mitfahrer erfolgen, gegebenenfalls auch mittels des Servers. Die Einigung auf den Fahrpreis kann vorzugsweise vor Fahrtbeginn erfolgen. Weiter bevorzugt kann die Abrechnung direkt zwischen Fahrer und Mitfahrer und/oder jeweils mit dem Organisationssystem erfolgen Insbesondere werden Preise für Fahrtstrecken an den Mitfahrer und/oder Gebote für Mitfahrten dem Fahrer übermittelt. Damit können Fahrer und/oder Mitfahrer anhand der preislichen Vorstellungen des jeweiligen Gegenübers über die jeweilige Mitfahrt entscheiden.

In einer bevorzugten Ausführung der Erfindung halten und/oder nutzen Fahrer und/oder Mitfahrer ein Softwareprogramm, insbesondere eine App. Dieses wird insbesondere auf ihren Mobilgeräten für die Zwecke und/oder die Abwicklung der Mitfahrt vorgehalten und/oder genutzt. Vorzugsweise wird eine Spracherkennung für die Kommunikation von Fahrer und/oder Mitfahrer untereinander und/oder mit dem Organisationssystem und/oder dem Softwareprogramm genutzt. Damit lassen sich die jeweiligen Vorstellungen auf besonders einfache Weise austauschen.

Ein System zur Implementierung eines Verfahrens nach vorstehenden Beschreibungen löst ebenfalls die eingangs geschilderte Aufgabe.

Außerdem wird die oben skizzierte Aufgabe gelöst durch ein Computerprogramm zur Ausführung eines Verfahrens nach obigen Beschreibungen.

Schließlich wird die Aufgabe gelöst durch ein Computersystem zur Ausführung eines Computerprogramms wie vorstehend beschrieben.

Ein bevorzugtes Ausführungsbeispiel der Erfindung wird im Folgenden anhand der Zeichnung näher beschrieben. In dieser zeigen:
Fig. 1 eine Prinzipdarstellung des Datenaustauschs beim erfindungsgemäßen Verfahren, und
Fig. 2 eine Prinzipdarstellung der Arbeitsweise des erfindungsgemäßen Verfahrens.

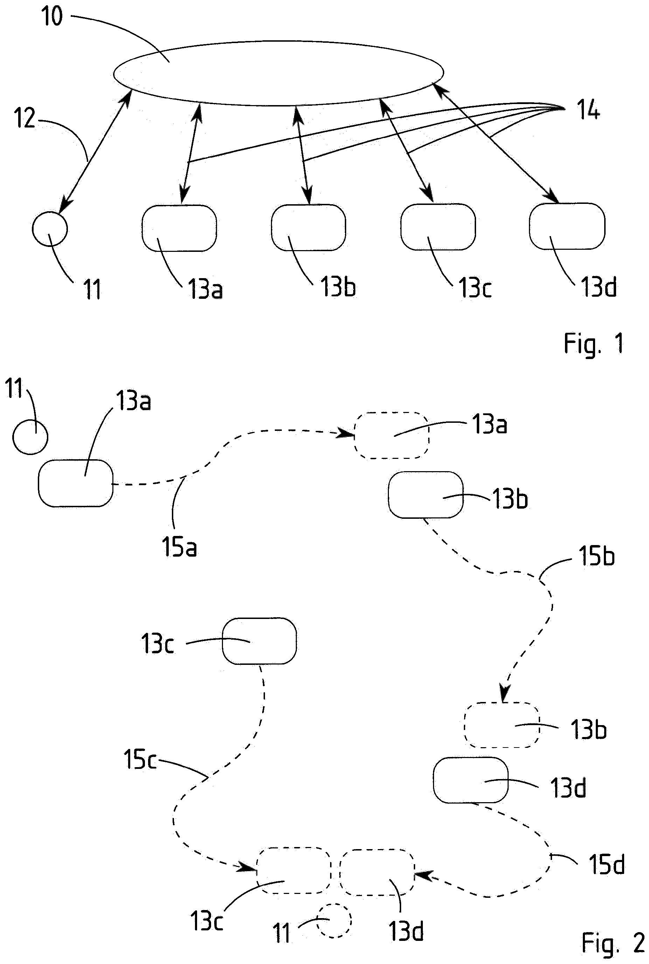

In den Figuren 1 und 2 der Zeichnung wird die prinzipielle Funktionsweise des erfindungsgemäßen Verfahrens gezeigt.

Zur Organisation des Systems für die Vermittlung von Mitfahrgelegenheiten dient ein Organisationssystem 10. Bei diesem Organisationssystem 10 kann es sich beispielsweise um ein spezielles Computersystem mit einer entsprechenden Datenbank handeln.

Das Organisationssystem 10 dient dazu, eine Nachfrage nach Mitfahrgelegenheiten bei Mitfahrern 11 einerseits und die jeweilige Mitnahmebereitschaft bei potentiell mitnehmenden Fahrern 13a, 13b, 13c, 13d andererseits aufzunehmen und miteinander abzugleichen. Ausgehend davon wird dann werden dann Mitfahrer 11 und Fahrer 13a, 13b, 13c, 13d miteinander in Kontakt gebracht.

Das Organisationssystem 10 speichert und verwaltet typischerweise Datensätze zu jedem Benutzer des Systems, also insbesondere den Fahrern 13a, 13b, 13c, 13d und Mitfahrern 11. Diese Daten beinhalten insbesondere Anmeldedaten für das System, also für die Anmeldung der Mobilgeräte oder Softwareprogramme am Organisationssystem 10. Aber auch weitere Daten, wie Zahlungsdaten, Kommunikationsadressen, Startort und/oder Zielort, beziehungsweise Position von Fahrer und/oder Mitfahrer etc., sind vorhanden. Positionen lassen sich insbesondere über Positionsermittlungen, wie beispielsweise per GPS (Global Positioning System) feststellen, alternativ aber auch über Mobilfunknetze, WLAN und ähnliches.

Verschiedene Daten werden dazu insbesondere dazu verwendet, die Benutzer zu identifizieren und natürlich voneinander zu unterscheiden. Der Mitfahrer und der Fahrer tauschen vorzugsweise wenigstens einen Sicherheitskode aus zur Sicherstellung und/oder Buchung der Mitfahrgelegenheit. Dies erfolgt vorzugsweise mittels ihrer Mobilgeräte. Weiter bevorzugt werden biometrische Daten überprüft und/oder ausgetauscht. Zur Absicherung kann beispielsweise eine Fingerabdruckerkennung und/oder Gesichtserkennung und/oder Stimmerkennung vorgenommen werden.

Die Prüfung kann insbesondere mittels Mobilgeräten erfolgen, wie Mobiltelefonen oder Tablets. Vorzugsweise dienen dazu Fingerabdruckscanner, Mikrofone beziehungsweise Kameras. Der Datenabgleich kann unmittelbar zwischen den Geräten und/oder mittels eines zentralen Servers erfolgen. Es kann eine direkte Verbindung zwischen diesen Mobilgeräten hergestellt werden und/oder es erfolgt ein direkter Datenaustausch. Auf diese Weise kann eine hohe Sicherheit vor allem bei Buchung und Abrechnung erreicht werden.

Um einen Abgleich persönlicher und/oder biometrischer Daten vornehmen zu können, kann eine Registrierung mittels entsprechender Daten erforderlich sein und/oder zur Bedingung gemacht werden. Hierzu lassen sich unmittelbar die biometrischen Daten der sich registrierenden Person einlesen oder auch offiziellen Dokumenten, wie Personalausweisen oder Reisepässen, entnehmen, beispielsweise aus enthaltenen Datenträgern wie RFID-Chips.

Die Daten von Fahrer und/oder Mitfahrer lassen sich jeweils auch mittels Spracherkennung ermitteln. Dies gilt auch für alle mit der geplanten Mitfahrt zusammenhängenden Daten, wie Fahrstrecken, Personen Gepäck und Preise. Vor allem lassen sich die Verhandlungen zwischen Fahrer und Mitfahrer auf diese Weise besonders einfach und gleichzeitig sicher gestalten. Die mittels Spracherkennung erhobenen Daten sind auf einfache Weise speicherbar, insbesondere direkt in Textform. Insbesondere müssen diese nicht in aufwändiger Weise erst nachträglich beispielsweise aus Tonaufnahmen als Beweisstück manuell erfasst werden. Auch Speicherplatz wird dadurch erheblich eingespart.
Zur zentralen Steuerung und/oder Verwaltung sind entsprechende Daten von Mitfahrern 11 wie auch potentiell mitnehmenden Fahrern 13a, 13b, 13c, 13d beziehungsweise dessen Kraftfahrzeugen an das Organisationssystem 10 zu übermitteln. Dazu dient zwischen Mitfahrer 11 und Organisationssystem 10 die Datenverbindung 12. Zwischen den Fahrern 13a, 13b, 13c, 13d und dem Organisationssystem 10 werden die Datenverbindungen 14 genutzt.

Für den Datenaustausch zwischen dem Organisationssystem 10 und den Mitfahrern 11 einerseits wie auch den Fahrern 13a, 13b, 13c, 13d andererseits können übliche Netzwerktechniken genutzt werden. Da es sich bei den Fahrern 13a, 13b, 13c, 13d und deren Fahrzeugen wie auch bei den Mitfahrern 11 jeweils um mobile Einheiten handelt, bietet sich hierfür die Nutzung von Mobilfunksystemen an. Beispielsweise können die üblichen Mobilfunkstandards 2G, 3G, 4G oder auch 5G eingesetzt werden.

Insbesondere können Fahrer 13a, 13b, 13c, 13d und Mitfahrer 11 für die Datenübertragung entsprechende Mobilgeräte, wie beispielsweise Mobiltelefone, Tablets, Smartwatches oder auch Notebookcomputer, aber beispielsweise auch vernetzte Navigationsgeräte oder ähnliches nutzen. Damit lassen sich Daten, wie Position, Bewegungsrichtung, und weitere für die Organisation von Mitfahrten wichtige Daten übermitteln.

Diese Mobilgeräte oder Endgeräte sind in der Regel personengebunden. Dies ist insbesondere der Fall bei Mobiltelefonen oder ähnlichem. Im Fall der mitnehmenden Fahrer 13a, 13b, 13c, 13d können die Mobilgeräte aber auch mit dem Fahrzeug gekoppelt statt dem Fahrer zugeordnet sein, beispielsweise bei im Fahrzeug vorhandenen Navigationsgeräten oder ähnlichem. So können verschiedene Fahrer 13a, 13b, 13c, 13d dasselbe Fahrzeug nutzen und jeweils auch Mitfahrer 11 mitnehmen. Gegebenenfalls können unterschiedliche Anmeldedaten am Organisationssystem 10 verwendet werden, um die Benutzer zu unterscheiden.

Um eine Mitfahrgelegenheit wahrnehmen zu können, meldet zunächst der Mitfahrer 11 seinen Mitfahrwunsch beim Organisationssystem 10 an. Dazu muss sich natürlich vorher der jeweilige Benutzer am Organisationssystem 10 authentifizieren. Typischerweise sind dabei weitere Daten wie Startort und auch Zielort anzugeben. Diese Daten können beispielsweise mittels einer Positionsbestimmung durch das jeweilige Mobilgerät oder Endgerät ermittelt werden, beispielsweise per GPS. Aber auch Abweichungen von der geplanten Fahrstrecke lassen sich so feststellen. Dies kann die Sicherheit von Mitfahrten erhöhen. Abweichungen von der geplanten Fahrstrecke lassen sich dabei sowohl vom Mobilgerät des Mitfahrers 11 wie auch vom Organisationssystem 10 feststellen. Beispielsweise kann eine Aufforderung an den Mitfahrer 11 oder auch den Fahrer 13a, 13b, 13c, 13d ausgegeben werden, eine derartige Abweichung von der geplanten Fahrtstrecke zu bestätigen. Dies kann einerseits die korrekte Berücksichtigung von Umwegen sicherstellen. Aber andererseits können auch Warnmeldungen oder sogar Notrufe an Behörden oder Sicherheitsdienste herausgegeben werden, um die persönliche Sicherheit der Beteiligten zu erhöhen, beispielsweise wenn Abweichungen vorliegen oder keine Rückmeldung erfolgt.

Ein primärer Einsatzzweck des Organisationssystems 10 ist dabei, dass ein Mitfahrer 11 seinem spontanen Mitfahrwunsch entsprechend bei einem Fahrer 13a, 13b, 13c, 13d in seiner Nähe zusteigen kann. So kann eine spontane Mitfahrt erfolgen.

In der Regel ist aber die vom Mitfahrer 11 angegebene Gesamtstrecke nicht durch einen Fahrer 13a, 13b, 13c, 13d abdeckbar, da Start und Ziel zumeist nicht übereinstimmen. Das erfindungsgemäße Organisationssystem 10 versucht daher dann aus der Vielzahl von Mitfahrangeboten mit Streckenabschnitten 15a, 15b, 15c, 15d mögliche Kombinationen für eine Gesamtstrecke mit Startort und Zielort des Mitfahrers 11 zusammenzustellen. Diese aus mehreren Streckenabschnitten 15a, 15b, 15c, 15d zusammengesetzte Gesamtstrecke kann dann der Mitfahrer 11 durch jeweilige Umsteigevorgänge zwischen den Fahrzeugen der Fahrer 13a, 13b, 13c, 13d zurücklegen.

Dabei kann die Gesamtstrecke durchaus einen Umweg gegenüber einer direkten Verbindung bedeuten, da die Teilstrecken beziehungsweise Streckenabschnitte 15a, 15b, 15c, 15d durch die einzelnen Fahrer 13a, 13b, 13c, 13d bestimmt werden. Im Ergebnis ist aber das Ziel, die Strecke vom Start zum Ziel zurückzulegen.

In der Fig. 2 ist ein Fall gezeigt, bei dem in der Tat die Teilstrecke 15c zwar durch den Fahrer 13c angemeldet wurde. Dieser fährt hier von seinem Startort 13c (mit durchgezogener Linie) entlang der Streckenabschnitts 15c zu seinem (gestrichelten) Zielort 13c. Diese Strecke 15c wurde aber in der Gesamtstrecke für den Mitfahrer 11 nicht berücksichtigt. Dieser gelangt nämlich zu seinem (gestrichelten) Zielort 11 durch Nutzung der Streckenabschnitte 15a, 15b und 15d mit den Fahrern 13a, 13, und 13d. Wie zu erkennen ist, wird hier auch durchaus ein Umweg gegenüber einer direkten Verbindung gefahren.

Sobald dann ein Mitfahrer 11 in ein Fahrzeug eines Fahrers 13a, 13b, 13c, 13d zugestiegen ist, wird ein Datenabgleich vorgenommen. Beispielsweise kann dies durch direkte Kontaktaufnahme der jeweiligen Mobilgeräte erfolgen.

So kann eine drahtlose Funkverbindung zwischen den beiden hergestellt werden, um sich gegenseitig auszuweisen und die Mitfahrt zu autorisieren. Als Funkschnittstellen kommen die üblichen drahtlosen Verbindungen in Betracht, wie Bluetooth, NFC, WLAN, IR oder ähnliches. Auch kann eine optische Erkennung eines auf einem Bildschirm oder einem Papier dargestellten Kodes, wie ein Strichcode oder ein QR-Code mittels einer Kamera gelesen werden.

Es können dazu auch Kodes verwendet werden, die zwischen den Geräten ausgetauscht werden oder auch durch die Benutzer, also Fahrer 13a, 13b, 13c, 13d und Mitfahrer 11 ausgetauscht werden, beispielsweise eine PIN oder eine TAN. Eine ähnliche Prozedur kann auch am Ende der Mitfahrt durchgeführt werden, um die korrekte Abwicklung beidseitig zu bestätigen.

Nach der Mitfahrt kann dann eine Abrechnung der gefahrenen Strecke mittels des Organisationssystems 10 erfolgen. Dieses verwendet dann die Bewegungsdaten von Fahrer 13a, 13b, 13c, 13d und/oder Mitfahrer 11, gegebenenfalls Start- und Zielort und/oder die durch die Benutzer bestätigten Randbedingungen der Mitfahrt. Ausgehend davon kann die Rechnungsstellung an den Mitfahrer 11 und die Gutschrift an den Fahrer 13a, 13b, 13c, 13d erfolgen.

Die Abrechnung kann je nach Abrechnungsmodell beispielsweise nach gefahrener Strecke oder auch auf Basis der vom Mitfahrer 11 angegebenen Direktverbindung zwischen Start und Zielort abgerechnet werden. In jedem Fall erhalten die jeweiligen Fahrer 13a, 13b, 13c, 13d anteilig ihre Mitnahmevergütung entsprechend ihres Anteils an der Gesamtstrecke.

Vorzugsweise kann die Einigung auf den Fahrpreis zwischen Fahrer 13a, 13b, 13c, 13d und Mitfahrer 11 vor Fahrtbeginn erfolgen. Dazu können beispielsweise fest vereinbarte Preise zugrunde gelegt werden, insbesondere seitens des Organisationssystems vorgegebene. Alternativ lassen sich individuelle Preise zwischen Fahrer 13a, 13b, 13c, 13d und Mitfahrer 11 aushandeln. Die jeweiligen Preise für Fahrtstrecken werden dazu an den Mitfahrer 11 und/oder entsprechende Gebote für Mitfahrten dem Fahrer 13a, 13b, 13c, 13d übermittelt. Damit können Fahrer 13a, 13b, 13c, 13d und/oder Mitfahrer 11 anhand der eigenen preislichen Vorstellungen des jeweiligen Gegenübers über die jeweilige Mitfahrt entscheiden.

Vorzugsweise lassen sich auch weitere Wünsche und Informationen bei der Buchung beziehungsweise Zuordnung von Fahrtstrecken und/oder Mitfahrgelegenheiten zu Mitfahrern 11 auswerten. Zum Beispiel kann eine geschlechterspezifische Vorgabe erfolgen, so dass zum Beispiel weibliche Mitfahrer nur weiblichen Fahrern zugeordnet werden.

Eine Bezahlung kann unmittelbar zwischen Fahrer 13a, 13b, 13c, 13d und Mitfahrer 11 durchgeführt werden. Hierzu kann beispielsweise mittels Bargeld, Banküberweisung, Bezahlsystemen oder auch Kreditkartenzahlungen bezahlt werden. Aber auch eine Bezahlung über eine Bankfunktion des Systems ist denkbar. Dazu lassen sich Guthaben für Fahrer 13a, 13b, 13c, 13d und Mitfahrer 11 vorhalten, die entsprechend verbucht werden. Somit kann die Liquidität eines Mitfahrers 11 bereits im Vorfeld einer Mitfahrt überprüft wie auch sichergestellt werden.

Um einen sinnvollen Einsatz des Systems sicherstellen zu können, lassen sich gegebenenfalls zusätzliche Aspekte berücksichtigen. Beispielsweise kann eine maximale Anzahl an Fahrern für einen Anbieter festgelegt werden. So lassen sich unerwünschte Kommerzialisierungen vermeiden, die insbesondere der Idee eines einfachen Ridesharing-Systems widersprechen können.

Eine Finanzierung des Systems kann beispielsweise durch Erhebung von Gebühren von Fahren und/oder Mitfahrern erfolgen. Eine Alternative ist ein durch Werbeeinnahmen finanzierter Betrieb. Dazu kann gezielte Werbung bei Fahrern und/oder Mitfahrern geschaltet werden, beispielsweise innerhalb der jeweiligen Software auf den Mobilgeräten. Damit kann eine schnelle Verbreitung des Systems im Markt erfolgen.

### Bezugszeichenliste

- 10: Organisationssystem
- 11: Mitfahrer
- 12: Datenverbindung
- 13a: Fahrer
- 13b: Fahrer
- 13c: Fahrer
- 13d: Fahrer
- 14: Datenverbindung
- 15a: Streckenabschnitt
- 15b: Streckenabschnitt
- 15c: Streckenabschnitt
- 15d: Streckenabschnitt

## Patentansprüche

1. Verfahren zur Organisation des Transport wenigstens einer Person als Mitfahrer (11) von einem Startort zu einem Zielort, wobei die Person als Mitfahrer (11) von einem Fahrer (13a, 13b, 13c, 13d) in einem Kraftfahrzeug mitgenommen wird, wobei der Mitfahrer (11) seinen Startort und seinen Zielort einem zentralen Organisationssystem (10) als Mitfahrdaten und Mitnahmewunsch mitteilt, wobei wenigstens ein Fahrer (13a, 13b, 13c, 13d) dem Organisationssystem (10) seine Position und/oder Fahrtstrecke und/oder Fahrtziel als Fahrerdaten mitteilt, wobei das Organisationssystem (10) eine Zuordnung des Mitfahrers (11) zu einem Fahrer (13a, 13b, 13c, 13d) vornimmt, um so die Mitnahme des Mitfahrers (11) vom Startort zum Zielort zu organisieren, **dadurch gekennzeichnet, dass** das Organisationssystem (10) die Mitnahme des Mitfahrers (11) derart organisiert, dass dessen Fahrtstrecke derart in mehrere Streckenabschnitte (15a, 15b, 15c, 15d) unterteilt wird, dass die einzelnen Streckenabschnitte (15a, 15b, 15c, 15d) anhand der Fahrerdaten mehrerer Fahrer (13a, 13b, 13c, 13d) eine Gesamtstrecke für den Mitfahrer (11) vom Startort zum Zielort ergeben.

2. Verfahren nach Anspruch 1, **dadurch gekennzeichnet, dass** mit Hilfe des Organisationssystems (10) während der Mitfahrt die aktuelle Position des Mitfahrers (11) mit weiteren potentiellen Mitfahrgelegenheiten für weitere Streckenabschnitte (15a, 15b, 15c, 15d) abgeglichen wird, um so die weitere Mitfahrt anhand aktueller Mitfahrdaten sicherzustellen, wobei vorzugsweise auch die Anzahl beziehungsweise Größe der Personen als Mitfahrern und/oder Gepäckstücke berücksichtigt wird.

3. Verfahren nach Anspruch 1 oder 2, **dadurch gekennzeichnet, dass** der Mitfahrer (11) auf zumindest zwei Streckenabschnitten (15a, 15b, 15c, 15d) zwischen Startort und Zielort von verschiedenen Fahrern (13a, 13b, 13c, 13d) und/oder mit verschiedenen Kraftfahrzeugen mitgenommen wird, wobei insbesondere ein Umstieg zwischen Kraftfahrzeugen erforderlich wird.

4. Verfahren nach einem der vorhergehenden Ansprüche, **dadurch gekennzeichnet, dass** dem Mitfahrer (11) und/oder Fahrer (13a, 13b, 13c, 13d) während der Fahrt ein Signal zur Beendigung der Mitfahrt gegeben wird, wobei vorzugsweise der Fahrer (13a, 13b, 13c, 13d) zum Anhalten und/oder der Mitfahrer (11) zum Ausstieg und/oder Umstieg in ein anderes Fahrzeug aufgefordert wird, weiter vorzugsweise durch eine direkte Verbindung und/oder einen direkten Datenaustausch zwischen diesen.

5. Verfahren nach einem der vorhergehenden Ansprüche, **dadurch gekennzeichnet, dass** die Fahrtstrecke zwischen Startort und Zielort aufgrund der Zusammensetzung aus mehreren Streckenabschnitten (15a, 15b, 15c, 15d) gegenüber einer direkten Verbindung verlängert wird und/oder dass zur Sicherstellung des Weitertransports wenigstens ein Umweg zurückgelegt wird, wobei vorzugsweise maximale Strecken und/oder Zeiten und/oder Kosten für Umwege festgelegt werden können.

6. Verfahren nach einem der vorhergehenden Ansprüche, **dadurch gekennzeichnet, dass** der wenigstens eine Fahrer (13a, 13b, 13c, 13d) seine Position und/oder seinen Zielort und/oder seine Mitnahmebereitschaft an das Organisationssystem übermittelt, vorzugsweise zumindest streckenabschnittsweise.

7. Verfahren nach einem der vorhergehenden Ansprüche, **dadurch gekennzeichnet, dass** der Mitfahrer (11) und/oder der Fahrer (13a, 13b, 13c, 13d) eigene Positionsdaten an das Organisationssystem übermitteln/übermittelt, vorzugsweise zumindest während der gemeinsam zurückgelegten Fahrtstrecke.

8. Verfahren nach einem der vorhergehenden Ansprüche, **dadurch gekennzeichnet, dass** die Übermittlung und/oder der Austausch von Daten zwischen Fahrer (13a, 13b, 13c, 13d) und/oder Mitfahrer (11) und/oder Organisationssystem (10) vorgenommen wird, vorzugsweise mittels Datenverbindung (12, 14), insbesondere mittels Mobilfunkgeräten, vorzugsweise per kurzreichweitigem Funk und/oder per Mobilfunknetz.

9. Verfahren nach einem der vorhergehenden Ansprüche, **dadurch gekennzeichnet, dass** der Mitfahrer (11) und der Fahrer (13a, 13b, 13c, 13d) wenigstens einen Sicherheitskode austauschen zur Sicherstellung und/oder Buchung der Mitfahrgelegenheit, vorzugsweise mittels ihrer Mobilgeräte, weiter vorzugsweise durch eine direkte Verbindung und/oder einen direkten Datenaustausch zwischen diesen, weiter vorzugsweise werden biometrische Daten überprüft und/oder ausgetauscht, beispielsweise durch Fingerabdruckerkennung und/oder Gesichtserkennung und/oder Stimmerkennnung.

10. Verfahren nach einem der vorhergehenden Ansprüche, **dadurch gekennzeichnet, dass** Mitfahrer (11) und Fahrer (13a, 13b, 13c, 13d) zu Beginn der Mitfahrt und/oder zum Ende der Mitfahrt einen Kode und/oder Zeitpunkt und/oder Position austauschen und/oder festhalten, vorzugsweise mittels ihrer Mobilgeräte, weiter vorzugsweise durch Verbindungsaufnahme der Mobilgeräte miteinander.

11. Verfahren nach einem der vorhergehenden Ansprüche, **dadurch gekennzeichnet, dass** eine Abrechnung der Mitfahrgelegenheit anhand der Erfassung der Positionsdaten des Mitfahrers (11) und/oder des Fahrers (13a, 13b, 13c, 13d) erfolgt, vorzugsweise durch Ermittlung der gemeinsam zurückgelegten Strecke und/oder des Anteils des Streckenabschnitts (15a, 15b, 15c, 15d) an der Gesamtstrecke, wobei vorzugsweise auch eine Einigung auf den Fahrpreis vor Fahrtbeginn erfolgen kann und/oder die Abrechnung direkt zwischen Fahrer und Mitfahrer und/oder jeweils mit dem Organisationssystem erfolgen kann, und/oder dass Preise für Fahrtstrecken an den Mitfahrer und/oder Gebote für Mitfahrten dem Fahrer übermittelt werden.

12. Verfahren nach einem der vorhergehenden Ansprüche, **dadurch gekennzeichnet, dass** Fahrer (13a, 13b, 13c, 13d) und/oder Mitfahrer (11) ein Softwareprogramm, insbesondere eine App, auf ihren Mobilgeräten für die Zwecke und/oder die Abwicklung der Mitfahrt vorhalten und/oder nutzen, wobei vorzugsweise eine Spracherkennung für die Kommunikation von Fahrer und/oder Mitfahrer untereinander und/oder mit dem Organisationssystem und/oder dem Softwareprogramm genutzt wird.

13. System und/oder Organisationssystem (10) zur Implementierung eines Verfahrens nach einem der vorhergehenden Ansprüche.

14. Computerprogramm zur Ausführung eines Verfahrens nach einem der vorhergehenden Ansprüche.

15. Computersystem zur Ausführung eines Computerprogramms nach Anspruch 14.
